(19) Europäisches Patentamt

European Patent Office

Office européen des brevets

(11) EP 1 316 835 A2

(12) EUROPEAN PATENT APPLICATION

(43) Date of publication:
04.06.2003 Bulletin 2003/23

(51) Int Cl.⁷: **G02B 27/44**, G02B 26/08, G02B 5/18, B81B 3/00

(21) Application number: 02258177.1

(22) Date of filing: 27.11.2002

(84) Designated Contracting States:
AT BE BG CH CY CZ DE DK EE ES FI FR GB GR IE IT LI LU MC NL PT SE SK TR
Designated Extension States:
AL LT LV MK RO SI

(30) Priority: 30.11.2001 US 232

(71) Applicant: MICROSCAN SYSTEMS INCORPORATED
Renton, Washington 98055 (US)

(72) Inventors:
• Scharf, Bruce R.
  Seattle, Washington 98103 (US)
• Daiber, Troy D.
  Auburn, Washington 98092 (US)

(74) Representative: Ertl, Nicholas Justin
Elkington and Fife,
Prospect House,
8 Pembroke Road
Sevenoaks, Kent TN13 1XR (GB)

(54) **A micro-opto-electro-mechanical system (MOEMS) comprising reflective Fresnel zone plates**

(57)  The present application discloses a micro-opto-electromechanical apparatus comprising a silicon wafer comprising a plurality of layers, a reflector formed in one of the plurality of layers, and a pattern on the reflector to focus or collimate an incident beam of radiation into a reflected beam.

FIG. 4B

EP 1 316 835 A2

**Description**

TECHNICAL FIELD

This disclosure relates generally to diffraction compensation using a reflector, and in particular but not exclusively, relates to micro-opto-electromechanical (MOEMS) systems that use a Fresnel reflector to collimate or focus radiation beams.

BACKGROUND

Diffraction is a physical phenomenon in which radiation is bent around the corner of an obstacle, such as the edge of a slit or hole. Because of diffraction, rays emanating from a point source of radiation usually do not leave the source in a parallel, coherent beam. Instead, the rays emanating from the point source diverge, so that the radiation leaving the point source actually forms a cone of light. If the cone of light is to be collimated into a parallel beam or focused to a spot, this must be done after the light leaves the source. Current approaches to collimating or focusing light beams fall into two categories: refractive and diffractive.

Refractive methods of collimating or focusing involve taking advantage of differences in the refractive indices of two or more media according to Snell's law. Thus, refraction is usually accomplished by transmitting the light through a refractive element such as a lens made of a transparent material, such as glass or plastic, whose refractive index is different than that or air or vacuum through which the light first travels after leaving the source. Refraction has several distinct disadvantages, which are particularly acute in the context of micro-opto-electro-mechanical systems (MOEMS), where the refractive elements must be very small and the amount of space between the light source and the refractive elements is also very small. For example, simple refractive elements suffer from several inherent flaws, such as spherical aberration, which limit the element's ability to focus or collimate. Also, since the light must pass through them, there is a certain amount of energy loss in the light beam. In cases where the light beams are of low power to begin with, or where the energy distribution of the refracted beam is critical, this can be a particularly difficult problem.

Refractive elements also suffer from several practical limitations, particularly in MOEMS systems. They are difficult to manufacture, since they must be very accurately ground and polished to achieve the desired light transmission and collimating/focusing functions. Because of the large amount of labor involved, these tend to be very expensive. In the context of MOEMS, the refractive elements become exceptionally difficult to make: because MOEMS refractive elements are so small, it is nearly impossible to grind and polish them to the needed accuracy. Thus, other manufacturing methods must be relied upon which result in less than ideal elements. Moreover, MOEMS systems tend to operate over a wide range of temperatures. Since a refractive element's collimating and focusing ability is critically dependent on its shape, it is important to make the elements using materials that are dimensionally stable over a wide range of temperatures. Unfortunately, most of the materials from which refractive MOEMS elements can be made do not have the desired dimensional stability.

Diffractive elements for collimating and focusing are an alternative to refractive elements. A diffractive element usually includes a series of closely-spaced narrow slits in an opaque medium. When a beam of radiation is incident on a diffraction grating it passes through the slits and is diffracted, causing a change in the direction of the beam. The slit spacing and wavelength of the incident radiation determine the amount of the direction change. By varying the slit spacing along the grating, the phenomenon of diffraction can be harnessed to collimate or focus a beam of light. Unfortunately, though, diffractive elements also suffer some of the same disadvantages as refractive ones. Most importantly, because the incident light must be transmitted through the slits in the grating, a substantial amount of the beam's energy is absorbed by the opaque parts of the grating. This substantially changes the energy distribution between the incident and diffracted beams. Diffraction gratings are also difficult to manufacture, since the slit size and spacing must be very accurate to achieve the desired collimation or focus.

Thus, there is a need in the art for devices that overcome the disadvantages of refractive and diffractive elements.

SUMMARY OF THE INVENTION

According to a first aspect of the invention, there is provided a micro-opto-electromechanical apparatus comprising a silicon wafer comprising a plurality of layers, a reflector formed in one or more of the plurality of layers and a pattern on the reflector to focus or collimate an incident beam of radiation into a reflected beam.

According to a second aspect of the invention, there is provided a micro-opto-electromechanical apparatus comprising a wafer comprising a single crystal silicon (SCS) layer separated by an insulator layer from a substrate layer, a reflector formed in the SCS layer, and a pattern formed on a surface of the reflector to focus an incident beam into a reflected beam.

The apparatus of the invention is preferably used in a system having a radiation source attached to a layer of the wafer to emit an incident beam.

BRIEF DESCRIPTION OF THE DRAWINGS

Non-limiting and non-exhaustive embodiments of the present invention are described with reference to the following figures, wherein like reference numerals refer to like parts throughout the various views unless otherwise specified.

Figure 1A is a drawing of an incident beam of radiation emanating from a source and being collimated by a reflector having a pattern thereon.

Figure 1B is a drawing of an incident beam of radiation emanating from a source and being focused by a reflector having a pattern thereon.

Figure 2A is a drawing of an embodiment of an elliptical pattern having uniformly distributed bonds.

Figure 2B is a drawing of an embodiment of a circular pattern having uniformly distributed bands at a smaller spacing than the bands in Figure 2A.

Figure 2C is a drawing of an embodiment of a circular pattern having non-uniformly distributed bands, with the bands near the center of the pattern having a larger spacing than the bands along the edges of the pattern.

Figure 3A is a cross-sectional view of an embodiment of pattern used to diffract radiation, illustrating an example of how band spacing can be calculated.

Figure 3B is an illustration showing en embodiment of how the band spacing in a pattern is calculated such that it has the same focusing or collimating effect as a parabolic mirror.

Figure 4A is a cross-sectional view of a silicon-on-insulator (SOI) wafer on which a MOEMS reflector having a Fresnel pattern therein can be built.

Figure 4B is a cross-sectional view of an embodiment of a MOEMS reflector having a Fresnel pattern thereon and built on a wafer such as is shown in Figure 3A.

Figure 5 is a plan view of an embodiment of a MOEMS system using a pair of reflectors such as shown in Figure 3B.

## DETAILED DESCRIPTION OF THE ILLUSTRATED EMBODIMENTS

Embodiments of an apparatus and system and method for collimating or focusing a radiation beam are described herein. In the following description, numerous specific details are described to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

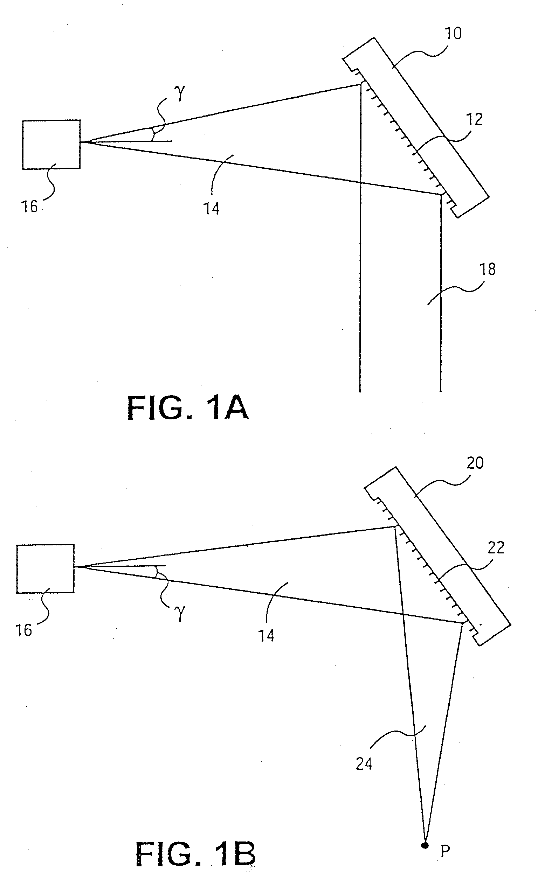

Figures 1A-1B illustrate two embodiments of reflectors having patterns thereon that cause them to modify incident beams of radiation that are reflected from them. Although the reflector patterns shown and discussed are Fresnel patterns, other patterns can be used for the same or different effects. Figure 1A illustrates an embodiment of a reflector 10 including a Fresnel pattern 12 that collimates an incident beam of radiation 14 emitted from a source 16, such as a light-emitting diode or laser diode. Although discussed in terms of radiation in the visible portion of the spectrum (*e.g.*, light), the source 16 may emit any kind of electromagnetic radiation. The incident beam 14 does not emanate from the source 16 as a parallel beam, but instead, due to diffraction it spreads at an angle $\gamma$. In three dimensions, the light emanating from the source forms a "cone." The incident beam 14 hits the Fresnel pattern 12 on the reflector 10 and is collimated into a reflected beam 18. Figure 1B illustrates an embodiment that focuses a beam 14 to a point P instead of collimating it. The incident beam 14 emanates from the source 16 hits the Fresnel pattern 22, and is both reflected into a reflected beam 24 and focused to the focal point P by the reflector 20.

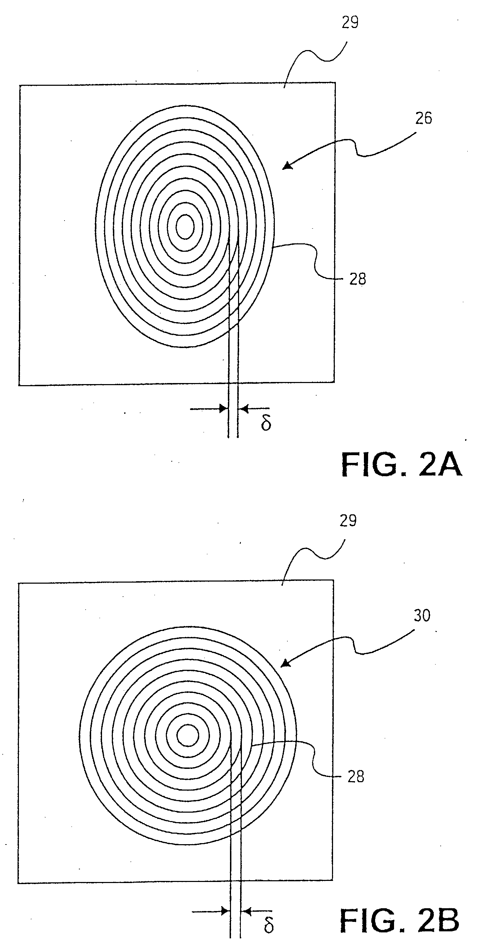

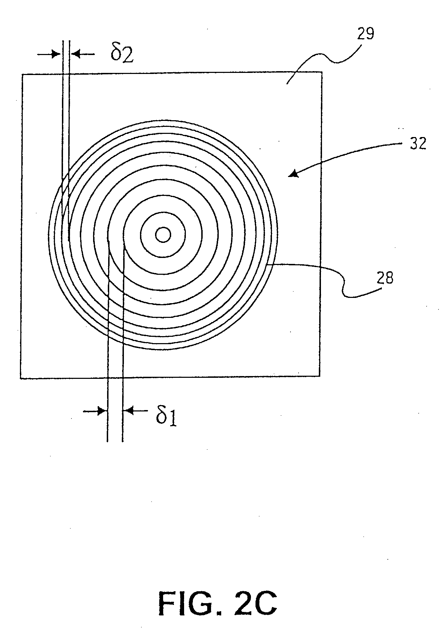

Figures 2A-2C illustrate examples of Fresnel patterns suitable for focusing or collimating beams of radiation. Again, although the reflector patterns shown and discussed are Fresnel patterns, other patterns such as binary patterns, linear patterns, etc., can be used for the same or different effects. A Fresnel pattern on the reflector usually comprises a plurality of closely-spaced bands or channels etched into the surface of the reflector. Generally, the optical power of a particular Fresnel pattern—that is, whether it collimates the incident beam 14 as shown in Figure 1A or focuses the incident beam as shown in Figure 1B—depends on the spread angle $\gamma$ of the beam, the wavelength of the incident radiation, the distance between the source and the pattern, and the spacing and distribution of the bands that form the Fresnel pattern. Figure 2A illustrates a reflector 29 having an elliptical Fresnel pattern 26 with a plurality of bands 28 evenly spaced at a distance $\delta$ from each other. In this case, the pattern is elliptical because the reflector is to be positioned at an angle with respect to the incident beam; since in three dimensions the incident beam forms a cone, the projection of the cone onto a surface positioned at an angle relative to the incident beam forms an ellipse. Figure 2B illustrates a reflector 29 having a circular Fresnel pattern 30 with a plurality of bands 28 evenly spaced at a smaller spacing $\delta$ than the spacing shown in Figure 2A. Because of the smaller spacing $\delta$, the Fresnel pattern 30 has more optical power than the Fresnel pattern 28. Figure 2C illustrates a reflector 29 having a circular Fresnel pattern 32 where the distribution of the bands 28 varies with the radius of the pattern, having a smaller spacing $\delta_2$ near the perimeter of the pattern and a larger spacing $\delta_1$ near the center of the pattern.

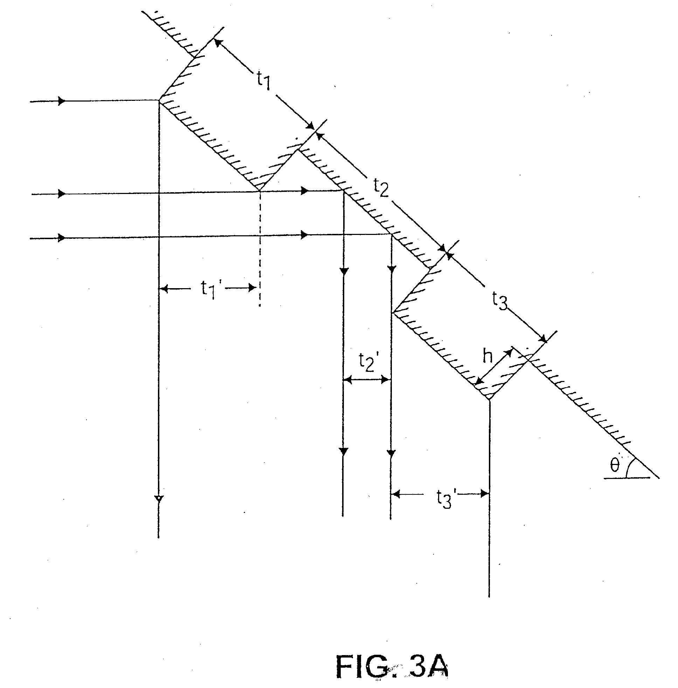

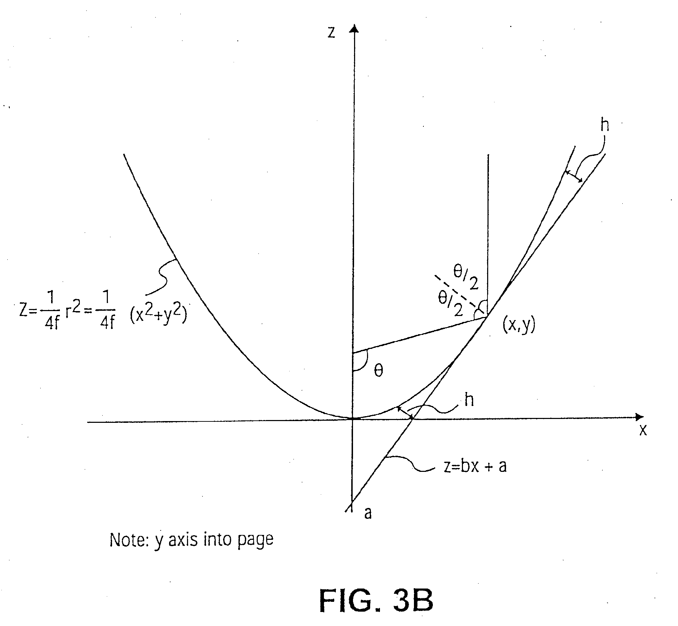

Figures 3A and 3B illustrate an embodiment of a process by which the appropriate spacing for the bands in a pattern is calculated. Figure 3A illustrates the computation of the spacing between bands on a flat reflector positioned at an angle θ relative to an incident beam of radiation. Each band comprises a rise of height $h$ and a width $t_1$ on the surface of the reflector, and each band is separated from the next band by a distance $t_2$; the distance $t_2$ thus corresponds to the width of the "valleys" between the bands. The height $h$ of the bands is selected based upon the wavelength λ of the radiation to be reflected, so that it will provide an optical path difference of λ/2 thus causing electromagnetic waves to interfere and cancel each other out. In MOEMS devices the height $h$ also depends upon height constraints that may be imposed during wafer processing. The width of the bands and spacing between them are given by the following equations:

$$t'_i = \frac{t_i}{\cos\theta} \text{ for } i \text{ odd;}$$

and

$$t'_i = \frac{t_i}{\cos\theta} - h\left(\sin\theta + \frac{1}{\sin\theta}\right) \text{ for } i \text{ even}$$

Figure 3B illustrates an embodiment of the computation of a pattern that will have a similar collimating or focusing effect as a parabolic reflector. As in Figure 3A, the resulting pattern comprises a series of bands, one for each order $m$ ($m$=0,1,2,...) of wavelength. The parabolic reflector is defined in the $x$-$z$ plane as $z = \frac{1}{4f}r^2$, where $f$ is the focal length of the reflector and $r$ is the distance from the origin in the $x$-$y$ plane, such that $r^2 = x^2 + y^2$. The parabolic surface is projected onto a flat plane defined by $z = a + bx$, such that for each order $m$ and wavelength λ, the distance between the plane and the parabola is equal to ¼ $m\lambda$. This difference of ¼ $m\lambda$ between the plane and the parabola will produce the desired optical path length of ½ $m\lambda$, since the radiation must twice travel the distance of ¼ $m\lambda$ between the parabola and the plane. Thus, subtracting the plane from the parabola, one gets the following equation:

$$\frac{1}{4f}(x^2 + y^2) - (bx+a) = \frac{m\lambda}{4} \text{ for } m = 0,1,2,...$$

re-arranging this equation, it becomes:

$$y = \sqrt{-x^2 + 4fbx + (4fa + m\lambda f)} \text{ for } m = 0, 1, 2,...$$

For radiation striking the parabolic reflector from an off-axis angle θ, as shown in Figure 3B, the quantities a and b are defined by

$$b = \tan\left(\frac{\theta}{2}\right)$$

and

$$a = \frac{x^2}{4f} - x\tan\left(\frac{\theta}{2}\right).$$

Thus, for each wavelength order $m$, a suitable pattern on a flat reflector can be calculated that will achieve the same collimating or focusing result obtained using a parabolic mirror.

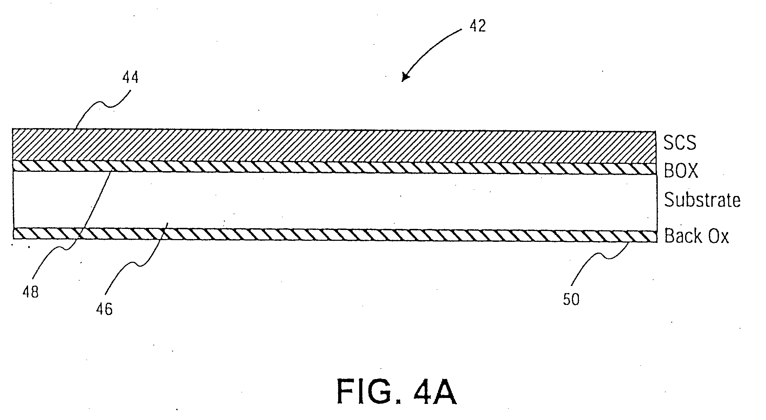

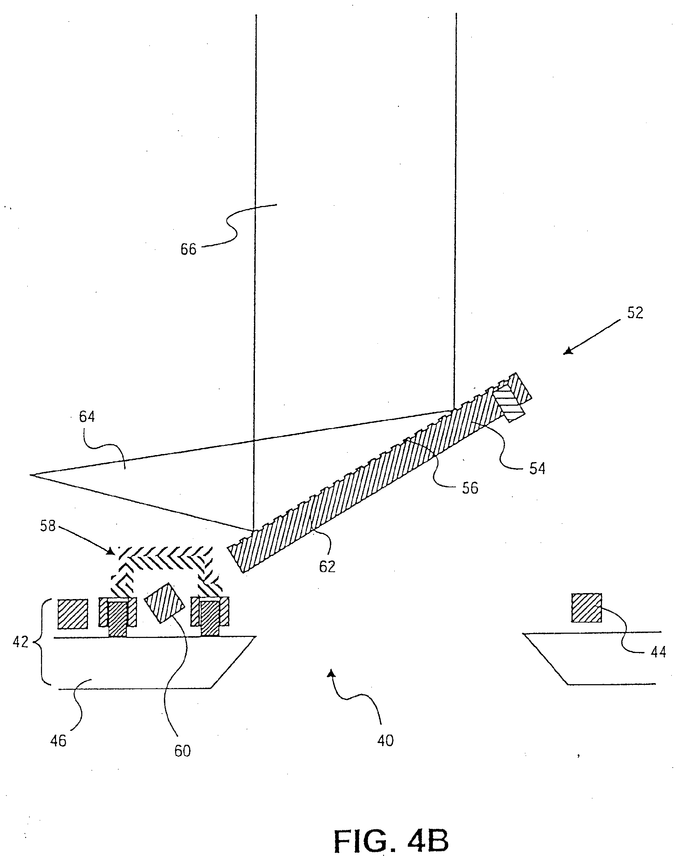

Figures 4A-4B illustrate a micro-opto-electro-mechanical (MOEMS) device 40 that is one embodiment of the present invention. Figure 4A illustrates the cross-section of a silicon-on-insulator (SOI) wafer 42 on which the MOEMS device 40 shown in Figure 4B is built. The wafer 42 is only a starting point for building an embodiment of the invention; materials may be selectively added to the wafer (*e.g.*, deposition of layers of polysilicon on top of the wafer), or selectively removed (*e.g.*, by etching) from the wafer or from materials deposited thereon. The wafer 42 is typically segmented into chips, with each chip having a MOEMS components thereon. As used herein, the term "wafer" include is both the complete wafer and any fraction thereof, such as a chip. Thus, although reference is made to the MOEMS device 40 being built on a wafer, the discussion herein also applies to MOEMS device constructed on a chip that is a subset of a wafer.

The wafer 42 comprises a thin single crystal silicon (SCS) device layer 44, and a substrate layer 46. The substrate layer 46 is preferably polysilicon. Between the device layers 44 and substrate layer 46 there is a buried oxide (BOX) layer 48 that integrally bonds the device layer to the substrate layer. This buried oxide layer 48 can also be used as an etch stop in wet and dry etching procedures to form a thin membrane. In addition, there is a back oxide layer 50 on the back side of the substrate layer 46, which is used to control etch down to the interface between the device layer 44 and substrate layer 46 from the backside. Preferably, the wafer is circular with a diameter of 100mm ± 0.5mm and a thickness of 525 ± 25 microns. The overall thickness of the wafer is made up of 1 ± 0.5 microns of backside oxide 50, 1 ± 0.05 microns of buried oxide (BOX), and 5 ± 0.5 microns of single crystal silicon. The remainder of the thickness is made up of the substrate. In addition to the SOI wafer described above, other wafers having different cross-sections or different materials may be used. For example, the present invention could be implemented in a wafer comprising layers of polysilicon, combinations of polysilicon with other materials such as insulators or conductors, or combinations of single crystal silicon with other materials.

Figure 4B illustrates an embodiment of a MOEMS device 52 constructed using the wafer 42 shown in Figure 4A. The device 52 comprises a reflector 54 with a pattern 56 thereon, movably attached to the wafer 42 by the hinge mechanism 58. The reflector 54 is constructed in the SCS layer 44 of the wafer, and includes a hinge pin 60 that fits within the hinge mechanism 58, and about which the reflector 54 rotates. In the embodiment shown, the reflector is built entirely in the SCS layer 44 to take advantage of SCS's superior material properties compared to other materials, such as polysilicon, that are typically used in MOEMS systems. The reflector 54 includes a pattern 56 etched in one side thereof. The pattern 56 can be, for example, any of the Fresnel patterns shown in Figures 2A-2C or another type of pattern, such as a binary or linear pattern. As discussed above, the pattern chosen will depend on the use to which the reflector will be put; if a Fresnel pattern is used, the configuration of the Fresnel pattern will depend on the optical power needed to focus or collimate the incident radiation. To improve the reflectivity of the pattern, a thin coating of a highly reflective material 62, such as gold or aluminum, is deposited on the pattern. The reflective material 62 improves the efficiency of the pattern because of its enhanced reflectivity, and because when it is deposited on the pattern it smoothes out some of the rough edges of the bands which interfere with reflection of the incident beam 64.

The hinge mechanism 58 comprises a plurality of layers of polysilicon alternately deposited on the wafer 42 and etched away to leave the hinge mechanism 58 behind on the wafer. The hinge mechanism 58 can be constructed according to standard photolithographic techniques know in the art. A light source (not shown) can be placed elsewhere on the wafer 42. The source emits an incident beam of radiation 64 that is reflected from the pattern 56 and, as shown, collimated into a reflected beam 66. The reflector 54 can also be coupled with a drive mechanism (not shown) that can rotate the reflector 54 about the hinge pin 60, such that the reflector can dynamically change its angle with respect to an incident beam 64.

In operation of the MOEMS device 52, the reflector 54 is initially in the same plane as the SCS layer 44. When the reflector 54, hinge mechanism 58 and hinge pin 60 are fully formed and ready for use, they are released from the wafer 42. The reflector 54 is then rotated about the hinge pin 60 in the interior of the hinge mechanism 58, until it is brought to the desired angle relative to the incident beam 64. When the radiation source (not shown) is turned on, the incident beam 64 emanates from the source, hits the pattern 56, and is both reflected into a reflected beam and collimated by the reflector 54.

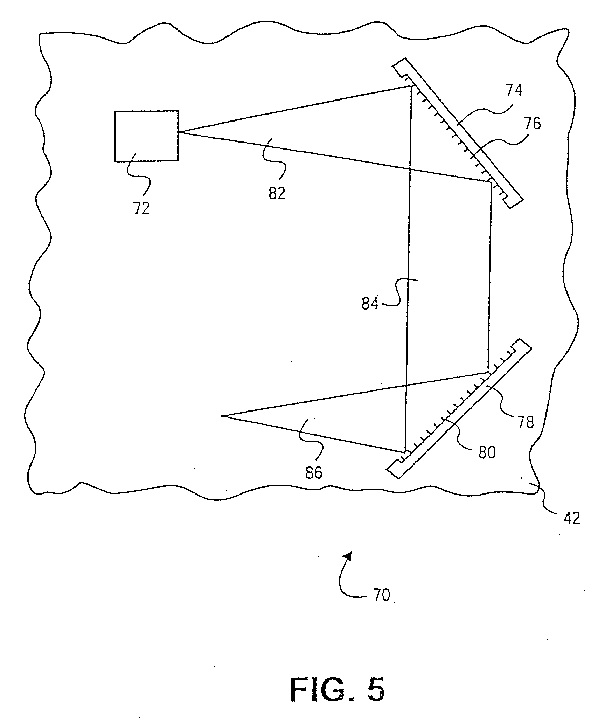

Figure 5 illustrates an embodiment of a MOEMS system 70 employing more than one reflector. The system 70 is built onto an underlying wafer 42 and includes a radiation source 72, a first reflector 74 with a pattern 76 thereon, and a second reflector 78 having a pattern 80 thereon. The radiation source 72 can be any source of electromagnetic radiation, but will usually emit radiation in the visible or infrared spectrum. For example, the radiation source could be a light-emitting diode, a laser diode, an optical fiber for telecommunication applications, and the like. The reflectors 74 and 78 can be similar to those illustrated in Figures 2A-2C, or may be of some other construction, depending on the application in which the reflectors will be used and the construction of the starting wafer. As shown, the pattern 76 is a collimating Fresnel pattern, while the pattern 80 is a focusing pattern. In other embodiments, the patterns 76 and 80 may be the same or different, depending on how the incident beam 82 is to be shaped or conditioned. For example, both patterns 76 and 80 can be collimating patterns, both can be focusing patterns, pattern 80 can be a collimating pattern and pattern 76 a focusing pattern, or vice versa. Additionally, one of the two reflectors 74 and 78 may be a regular mirror with no pattern at all on it, or one or both of the reflectors 74 and 78 may be scanning mirrors capable of rotating about one or more axes, so that a beam reflected from the scanning reflector can be aimed in different directions.

In operation of the system 70, the incident beam 82 leaves the source 72 and is reflected from the first reflector 74, which is positioned at the proper angle relative to the incident beam such that its reflected beam 84 is directed to the second reflector 78. The first reflector 74 reflects and collimates the incident beam 82 and re-directs it to the second reflector 78. The second reflector 78 in turn focuses the reflected beam 84 and turns it into a focused reflective beam 86. Although as shown the beams 82, 84 and 86 remain within the plane of the wafer 42, the beams can also be directed to some other device on the wafer, or can also be used to direct the beam to some other device that may be out of the plane of the wafer 42. The system 70 can be used, for example, to condition a laser beam for a scanner or to route optical signals from one optical fiber to another. The reflectors 74 and 78 working in combination make the size of the beam suitable for the required dot size needed for scanning. Thus, the beam 86 can be directed to a scanning mirror that will then reflect it in such a way that it will scan across a bar code.

The embodiments of devices using reflectors as described above offer numerous advantages over prior art devices in solving the problem of forming a beam radiating from a source. Most importantly, the embodiments shown overcome several of the disadvantages inherent in refractive and diffractive approaches to conditioning a beam of radiation emanating from a source. Because the embodiments described operate using reflection instead of refraction or diffraction, they do not absorb or otherwise prevent any radiation from passing through them, and thus do not significantly alter the energy distribution of an incident beam.

The above description of illustrated embodiments of the invention, including what is described in the Abstract, is not intended to be exhaustive or to limit the invention to the embodiments disclosed. While specific embodiments of the invention are described herein for illustrative purposes, various equivalent modifications are possible within the scope of the invention, as those skilled in the relevant art will recognize. These modifications can be made to the invention in light of the above detailed description.

The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

**Claims**

1. A micro-opto-electromechanical apparatus comprising:

   a silicon wafer comprising a plurality of layers;
   a reflector formed in one or more of the plurality of layers; and
   a pattern on the reflector to focus or collimate an incident beam of radiation into a reflected beam.

2. The apparatus of claim 1, wherein:

   the silicon wafer comprises a single crystal silicon (SCS) layer separated by an insulator layer from a substrate layer;
   the reflector is formed in the SCS layer; and
   the pattern is formed on a surface of the reflector.

3. The apparatus of claim 2, wherein the pattern formed on the surface of the reflector is to focus the incident beam into the reflected beam.

4. The apparatus of any preceding claim further comprising a second reflector positioned at a second selected angle relative to the reflected beam.

5. The system of claim 4 wherein the second reflector is a scanning mirror capable of rotating about one or more axes.

6. The apparatus of any preceding claim wherein the pattern is a Fresnel pattern that is circular or elliptical.

7. The apparatus of any one of claims 1 to 5 wherein the pattern comprises a plurality of uniformly spaced bands.

8. The apparatus of any one of claims 1 to 5 wherein the pattern comprises a plurality of non-uniformly spaced bands.

9. The apparatus of any preceding claim wherein the pattern is covered with a highly reflecting coating.

10. The apparatus of claim 9 wherein the coating is gold.

11. The apparatus of any preceding claim wherein the radiation is electromagnetic radiation in the visible portion of the spectrum.

12. The apparatus of any one of claims 1 to 10 wherein the radiation is electromagnetic radiation in the infrared portion of the spectrum.

13. A micro-opto-electromechanical system comprising:

   a micro-opto-electromechanical apparatus as claimed in any preceding claim; and
   a radiation source attached to a layer of the wafer to emit an incident beam.

FIG. 1A

FIG. 1B

FIG. 2A

FIG. 2B

$\delta_2$

29

32

28

$\delta_1$

# FIG. 2C

FIG. 3A

$$Z = \frac{1}{4f} r^2 = \frac{1}{4f} (x^2 + y^2)$$

$$z = bx + a$$

Note: y axis into page

**FIG. 3B**

42

44

| SCS |
| BOX |
| Substrate |
| Back Ox |

48

46

50

# FIG. 4A

FIG. 4B

FIG. 5